# EUROPEAN PATENT APPLICATION

(11) **EP 4 729 980 A1**
(43) Date of publication of application: **22.04.2026**
(21) Application number: 25208843.0
(22) Date of filing: 15.10.2025
(51) Int. Cl.: G01S 7/292, G01S 7/4865, G01S 7/487

(54) **LOW-POWER LIDAR SYSTEM**

(30) Priority: 17.10.2024 US 202418918177
(71) Applicant: NXP B.V., 5656 AG Eindhoven (NL)
(72) Inventor: VAN DER WERF, Ronald, 5656AG Eindhoven (NL); KULESH, Maxim, 5656AG Eindhoven (NL); GEHRELS, Cornelis, 5656AG Eindhoven (NL)
(74) Representative: Colaiuda, Antonella

(57) **Abstract**

A light detection and ranging (LIDAR) system includes transmit optics to transmit a LIDAR transmit signal, receive optics to receive a receive a signal reflected by an object, and a correlator to sample a value of the reflected signal based on a characteristic of the transmit signal, such as a rising edge, a falling edge, or a peak of the transmit signal. The correlator includes a plurality of correlator bins to sample values of the reflected signal at different time increments. The correlator bins include clock inputs that are clocked or activated by the transmit signal.

## Description

### BACKGROUND

The present disclosure relates generally to light detection and ranging (LIDAR) systems. LIDAR is used in many different fields for different purposes, such as for measuring distances and velocities in vehicle systems, distinguishing between types of surfaces and objects in geospatial mapping, and precisely measuring object dimensions and positions in manufacturing environments. LIDAR systems emit light signals and measure the amount of time the light takes to travel to an object and back to a sensor associated with the LIDAR system. The measured amount of time, corresponding to the combined time of transmission and reflection of the light and typically referred to as a time-of-flight, can be used to estimate the distance to an object, and repeated measurements can be used to estimate the velocities of objects or the motion of objects relative to the LIDAR system or an associated sensor. However, LIDAR sensors often operate in environments that contribute significant amounts of noise to signals received at a LIDAR sensor, which can be caused by sunlight, streetlights, vehicles' headlights, fog, rain, and so on, and so it is important to be able to isolate a transmitted LIDAR signal from other noise received from the environment. Correlation techniques are often used to filter out the noise and improve the accuracy of the distance measurements. By correlating the received signal with a transmitted pulse pattern, LIDAR systems are able to distinguish between reflections from objects resulting from the signal transmitted by the LIDAR system and spurious signals caused by noise in the environment.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a low-power light detection and ranging (LIDAR) system in accordance with some embodiments.
FIG. 2 is a block diagram of a low-power LIDAR signal correlation scheme in accordance with some embodiments.
FIG. 3 is a block diagram of a low-power LIDAR signal correlator in accordance with some embodiments.
FIG. 4 is a flow diagram of a method of operating a low-power LIDAR system in accordance with some embodiments.

### DETAILED DESCRIPTION

The transmitted light signal in LIDAR systems typically has a specific shape or pattern, which in some implementations takes the form of a series of light pulses similar to a morse code or binary signal. When light is detected by the sensor of the LIDAR system, the LIDAR system uses correlation to detect the presence of the expected pattern of the transmitted signal in the received signal. This process typically involves comparing the received signal with the transmitted signal and identifying peaks in the correlation output that correspond to detected pulses. After a reflected signal is detected, a time-of-flight is typically estimated based on a peak in the correlation output, which corresponds to the time delay between the transmitted and received signals, allowing for precise distance estimations. In advanced LIDAR systems, the entire waveform of the detected signal is analyzed using correlation techniques, which allows for the extraction of additional information, such as the shape and size of the object, by examining how the waveform correlates with various expected patterns. However, inefficiencies in detecting signals and correlating received signals with transmitted signals often result in significant power consumption due to the amount of data that needs to be processed, which can make the use of LIDAR systems impractical in applications where available power is limited or where high-power dissipation is undesirable.

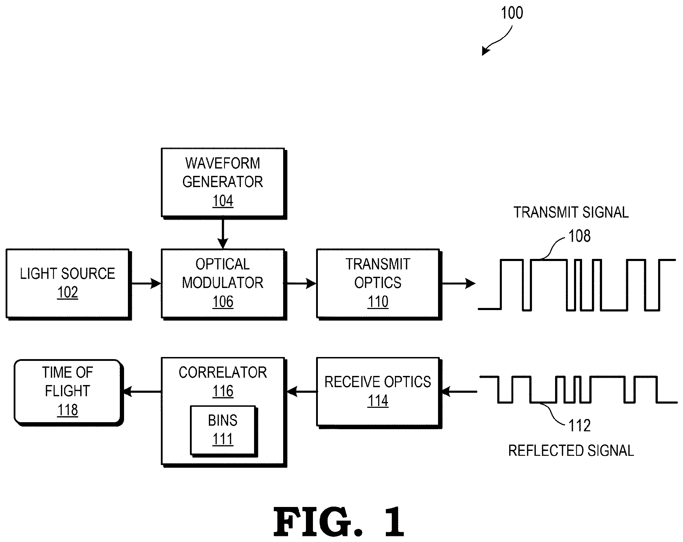

Aspects of the disclosure, as illustrated in FIGS. 1-4, relate to low-power LIDAR systems and, in particular, a low-power LIDAR signal correlation scheme that enables LIDAR systems to more efficiently correlate received signals with transmitted signals. Using the disclosed low-power LIDAR signal correlator to match a received signal with a transmitted signal to, e.g., determine the time-of-flight, enables the use of LIDAR systems in applications where available power is limited or where high-power dissipation is undesirable and generally provides for more efficient LIDAR systems having longer battery life and less expensive operation. In some embodiments, the correlator comprises correlator bins that receive and accumulate signal data and are clocked or activated based on a characteristic of a transmit signal generated by a LIDAR system, such as a rising edge, a falling edge, or a peak of the transmit signal. By using clock inputs that are activated by or based on the transmit signal to clock or activate the correlator bins, the disclosed low-power LIDAR system further reduces power consumption.

In some embodiments, routing a transmit signal generated by a LIDAR system or a portion thereof to clock inputs of correlator bins reduces the complexity of circuits needed to implement a low-power LIDAR system and increases the efficiency of correlating reflected signals with transmitted signals by reducing correlator activity and the required dynamic range per bin, i.e., the range of signal intensities that can be measured or recorded within each bin, resulting in significant energy savings. On the other hand, as the overall functionality of the low-power LIDAR system and correlator disclosed herein is similar to that of conventional LIDAR systems, modifications needed to implement the disclosed low-power LIDAR signal correlators are limited and can be incorporated without significant and costly redesigns.

FIG. 1 is a block diagram of a low-power light detection and ranging (LIDAR) system 100 in accordance with some embodiments. As shown in FIG. 1, the low-power LIDAR system comprises a light source 102 and a waveform generator 104, which an optical modulator 106 uses to generate a transmit signal 108 that is emitted into an environment through transmit optics 110 or modules, such as one or more lenses, electrical drivers, laser diodes, and/or other passive optics. In particular, the waveform generator 104 produces a waveshape or pulse pattern that the optical modulator 106 uses to alter light received from the light source 102 to generate the transmit signal 108. After the transmit signal 108 is reflected by an object, a reflected signal 112 passes through receive optics 114 or modules, such as one or more lenses, electrical drivers, and/or other passive optics, and is detected and processed by a correlator 116 in order to estimate, e.g., a time-of-flight 118.

Generally, as noted above, the correlator 116 includes a number of correlator bins 111 and matches a received signal with a transmitted signal to, e.g., determine the time-of-flight. The correlator 116 can include hardware, such as one or more dedicated integrated circuits or digital signal processors, software running on an embedded microcontroller or a general-purpose computer used for processing signals, or a combination thereof. In some embodiments, the receive optics 114 include a single-photon avalanche diode (SPAD) photodiode or an array of SPAD photodiodes; however, in other embodiments, the receive optics 114 include any appropriate photodetection or photodiode sensor or array of sensors.

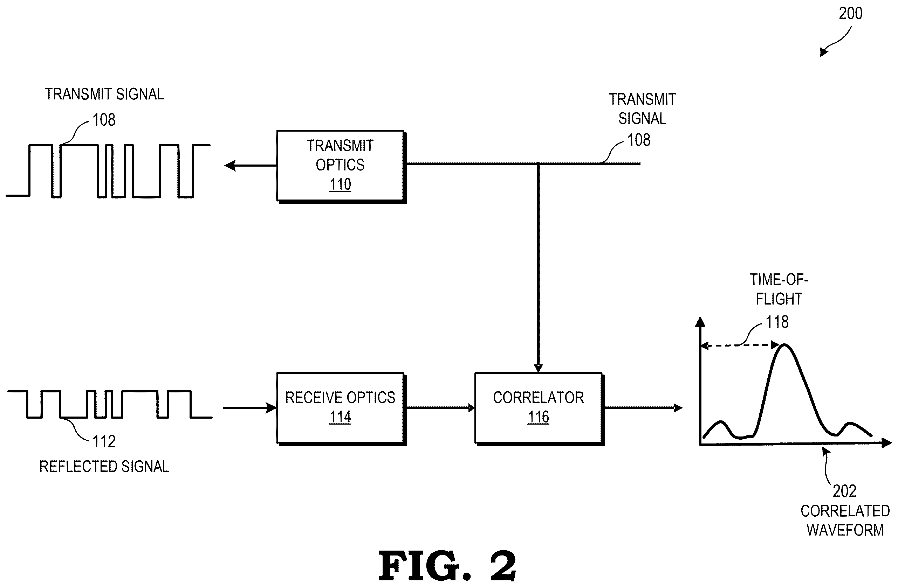

FIG. 2 is a block diagram of a low-power LIDAR signal correlation scheme 200 in accordance with some embodiments. The low-power LIDAR signal correlation scheme 200 clocks the correlator 116 based on values of the transmit signal 108, and, as a result, the correlator 116 samples a value of the received signal at a sampling rate that is based on a characteristic of the transmit signal. For example, in some embodiments, a characteristic such as a rising edge, falling edge, or peak of the transmit signal 108 is used to clock or activate the correlator 116, and in particular the correlator bins 111. Using the low-power LIDAR signal correlation scheme 200 of FIG. 2 enables the low-power LIDAR system 100 of FIG. 1 to generate correlated waveforms 202 and time-of-flight 118 estimations based on sampled values of the received signal and to utilize high peak power, low duty cycle emitters, such as infrared lasers, or low peak power, high duty cycle emitters, such as LEDs, as appropriate, in different implementations. Correlated waveforms 202 are processed output signals resulting from the correlation process between the transmitted signal and the received signal and generally represent how well the received signal matches the transmitted signal as a function of time. For example, peaks in the correlated waveforms 202 indicate points in time where the received signal closely matches the transmitted pulse, corresponding to potential distances to objects.

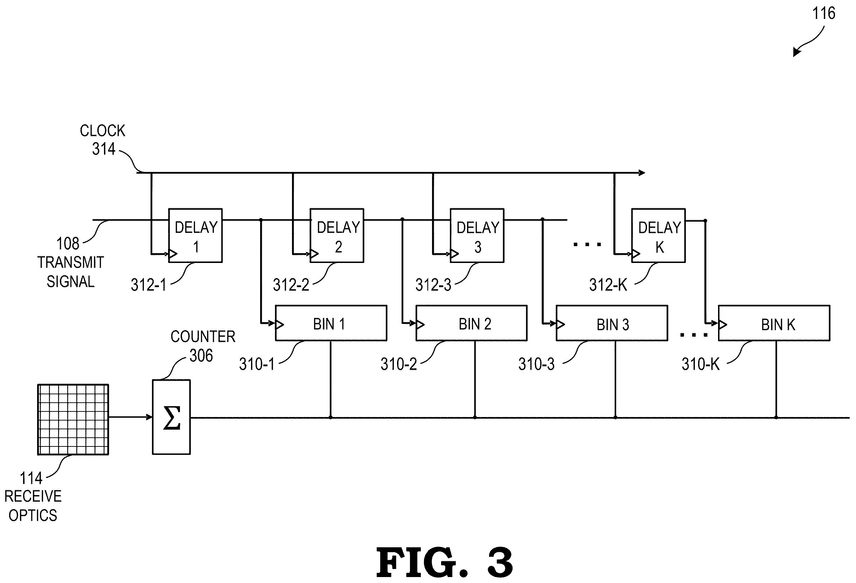

FIG. 3 is a block diagram of the low-power LIDAR signal correlator 116 of FIGS. 1 and 2 in accordance with some embodiments. As shown in FIG. 3, after the receive optics 114 detect a signal, which ideally corresponds to a transmit signal 108, a counter 306, such as a parallel counter, counts a number of pulses or signals detected within a specific period or a number of sequential periods of time. After each period of time in which the counter 306 accumulates numbers of pulses or signals, the counter 306 provides an output to accumulator or correlator bins 310, such as one of bins 310-1, 310-2, 310-3, and 310-K, respectively. Correlator bins 310 can be implemented in hardware or software, or a combination thereof, and generally function as memory locations for recording time-of-flight data corresponding to different respective distances. Notably, the use of K in reference numerals herein and ellipses in the drawings indicate that the number of associated components can vary from one to many, depending on requirements of specific implementations.

The accumulator or correlator bins 310 collect and sum received signal data over a specific period, which helps to enhance the signal-to-noise ratio of the system 100 by averaging out random noise while reinforcing consistent return signals reflected from objects. During correlation, a received signal is compared with the transmitted signal, and the correlator bins 310 store the results of these comparisons. Each bin 310 typically represents a time delay or time range corresponding to a specific distance the transmitted signal travels during transmission to and reflection from an object, and the values in the bins 310 indicate the strength of the correlation at different time delays. Peaks in data stored in the bins 310 signify strong correlations typically resulting from a received signal corresponding to an object a particular distance. Based on which bin 310 contains peak values, the system 100 estimates a time delay between the transmitted and received signals. This time delay is then used to calculate the distance to the object based on the speed of light. Accumulating the outputs from the counter 306 over multiple time periods helps reduce the impact of environmental or random noise, as bins 310 that consistently accumulate higher values indicate valid reflections of a transmitted signal while noise tends to be distributed randomly across bins 310. The use of multiple bins 310 allows for finer resolution in distance measurement, as a greater number of bins 310 enables more precise estimations of the exact return time of a reflected signal, leading to better range resolution.

Concurrently with the counter 306 providing outputs to the bins 310, in order to store a correlated signal in the bins 310, the system 100 provides the transmit signal 108 to a plurality of delay circuits 312, such as delay circuits 312-1, 312-2, 312-3, and 312-K, which provide increasingly delayed versions of the transmit signal 108 to each of the bins 310 based on a clock signal 314. For example, in some embodiments, the output of delay circuit 312-1 is provided to a first bin 310-1 after one clock cycle or a first duration based on a first number of clock cycles, the output of delay circuit 312-2 is provided to a second bin 310-2 after two clock cycles or a second duration based on a second number of clock cycles greater than the first number of clock cycles, and so on. Thus, each of the correlator bins is associated with delay circuitry 312 that provides the transmit signal 108 to clock inputs of the associated correlator bins 310 at predetermined time increments. In response to the outputs of the delay circuits 312, the correlator bins 310 sample values of the received signal at different time increments such that a correlated waveform 202 can be produced based on the values stored in each of the bins 310.

Accordingly, the low-power LIDAR signal correlation scheme 200 clocks the correlator 116 based in part on values of the transmit signal 108, and, as a result, the correlator 116 samples a value of the received signal at a sampling rate that is based on a characteristic of the transmit signal. That is, rather than clocking the bins 310, such as bins 310-1, 310-2, 310-3, and 310-K, with a high frequency clock, the correlator bins include clock inputs that are activated by or based on a characteristic of the transmit signal, such as a rising edge, falling edge, or peak of the transmit signal 108. The bins 310 include or are associated with multipliers that multiply values of the transmit signal 108 by outputs received from the counter 306 and store the results in the bins 310. By multiplying the output from the counter 306 by the output of each respective delay circuit 312 and storing the result in different bins 310 corresponding to each delay circuit 312, the correlator bins 310 effectively sample values of the received signal at different, successive time increments.

By using clock inputs that are activated by or based on the transmit signal to clock or activate the bins 310 and using appropriate values for the delay circuits 312, the low-power LIDAR signal correlator 116 and, by extension, the low-power LIDAR system 100 of FIG. 1, enables the use of LIDAR systems in applications where available power is limited or where high-power dissipation is undesirable and generally provides for more efficient LIDAR systems having longer battery life and less expensive operation. In some embodiments, signals generated based on the receive optics 114, such as SPAD pixel events, are correlated with the transmit signal 108 in real-time. In some embodiments, the correlator 116 enables the accumulation and correlation of all outputs from the receive optics 114, such as SPAD pixel events, without the need for a validation circuit, which is typically required in, e.g., conventional LIDAR systems that use time-to-digital converters and are typically limited to a single timestamp per acquisition cycle. Such conventional LIDAR systems typically use a validation circuit, which typically includes a thresholding mechanism that only allows signals above a certain amplitude to be considered valid, to determine whether returned signals should be used for correlation. However, by using real-time correlation activated by or based on the transmit signal in accordance with embodiments described herein, all SPAD detection events can be accumulated without the need for such a validation circuit due to the reduced overall data rates. To increase the dynamic range of the system by providing an improved signal-to-noise ratio, in some embodiments, multiple SPADs are used per pixel to detect returned signals. Each SPAD is triggered (e.g., output goes to digital 1) when a photon is detected. The counter 306 counts, e.g., in real-time, how many SPADs are triggered and feeds that value to the bins 310.

In some embodiments, edge- or peak-based correlation dramatically reduces power dissipation, as outputs from the receive optics 114 are only correlated with a characteristic of the transmit signal 108, and also reduces timing closure requirements due to practical limits on the distance between two edges or peaks in the transmit signal 108. In some embodiments, a single bin 310, such as bin 1 310-1, corresponding to a rising edge, falling edge, or a peak of the transmit signal 108, is used to perform correlation with a received signal, and the same bin is used as the clock trigger for all the correlator bins 310. In some embodiments, the transmit signal 108 itself is propagated through the correlator 116 at the required resolution. Using a rising edge, falling edge, or peak of the transmit signal 108 to clock or activate the correlator 116 results in 10-50 times lower correlator activity and the required dynamic range per bin is decreased by 3-5 bits, resulting in significant energy savings. For example, because fewer signals are processed in each bin for a given period of time, the variation in signal intensity within each bin is lower, reducing the need for a wide dynamic range.

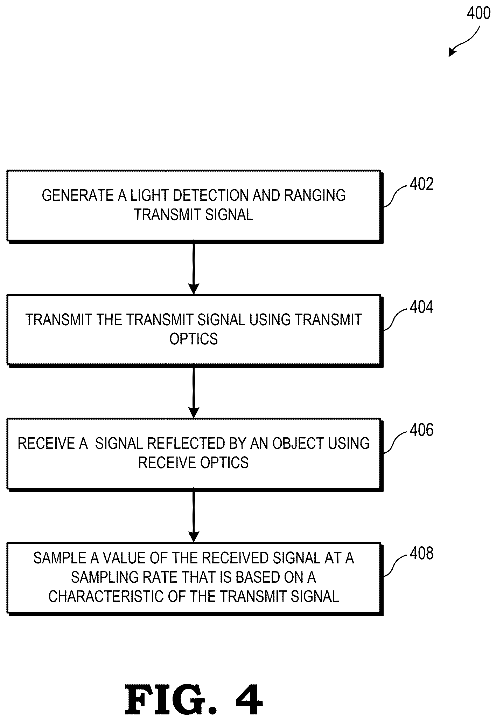

FIG. 4 is a flow diagram of a method 400 of operating a low-power LIDAR system such as the low-power LIDAR system 100 in FIG. 1 and the low-power LIDAR signal correlator 116 of FIGS. 1-3, in accordance with some embodiments. At block 402, the low-power LIDAR system 100 generates a LIDAR transmit signal, such as the transmit signal 108 of FIG. 1, FIG. 2, and FIG. 3, and, at block 404, the system 100 transmits the transmit signal using transmit optics, such as the transmit optics 110 of FIGS. 1 and 2. At block 406, the system 100 receives a signal reflected by an object using receive optics, such as the receive optics 114 of FIGS. 1-3, and, at block 408, the low-power LIDAR signal correlator 116 of FIGS. 1-3 samples a value of the received signal at a sampling rate that is based on a characteristic of the transmit signal, such as a rising edge, falling edge, or a peak of pulses in the transmit signal. In some embodiments, the receive optics comprise a SPAD array. In some embodiments, as shown in FIG. 2, the system 100 generates a correlated waveform, such as correlated waveform 202, based on the sampled value of the received signal. In some embodiments, the system 100 determines a time-of-flight, such as the time-of-flight 118 of FIGS. 1 and 2, for the reflected signal based on sampled values of the received signal. In some embodiments, the system 100 uses a plurality of correlator bins, such as the bins 310 shown in FIG. 3, to sample values of the received signal at different time increments. In some embodiments, as discussed further hereinabove, the correlator bins are activated or clocked by the transmit signal.

In some embodiments, certain aspects of the techniques described above, such as portions of the waveform generator 104 of FIG. 1, the correlator 116 of FIGS. 1-3, and portions of the method 400 of FIG. 4, may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
generating a light detection and ranging (LIDAR) transmit signal;
transmitting the transmit signal using transmit optics;
receiving a signal reflected by an object using receive optics; and
sampling a value of the received signal at a sampling rate that is based on a characteristic of the transmit signal.

2. The method of claim 1, further comprising sampling values of the received signal at a plurality of correlator bins at different time increments.

3. The method of claim 2, further comprising activating the correlator bins with the transmit signal.

4. The method of claim 2 or claim 3, wherein each of the correlator bins is associated with delay circuitry that provides the transmit signal to clock inputs of the associated correlator bins at predetermined time increments.

5. The method according to any preceding claim, wherein the characteristic is a rising edge, a falling edge, or a peak of pulses in the transmit signal.

6. The method according to any preceding claim, further comprising generating a correlated waveform based on the sampled value of the received signal.

7. The method according to any preceding claim, further comprising determining a time-of-flight for the reflected signal based on sampled values of the received signal.

8. An apparatus comprising:
transmit optics to transmit a light detection and ranging (LIDAR) transmit signal;
receive optics to receive a receive a signal reflected by an object; and
a correlator to sample a value of the received signal at a sampling rate that is based on a characteristic of the transmit signal.

9. The apparatus of claim 8, wherein the characteristic is a rising edge, a falling edge, or a peak of pulses in the transmit signal.

10. The apparatus of claim 8 or claim 9, wherein the receive optics comprise a single-photon avalanche diode (SPAD) array.

11. The apparatus according to any of claims 8 to 10, wherein the correlator generates a correlated waveform based on the sampled value of the received signal.

12. The apparatus according to any of claims 8 to 11, wherein the correlator determines a time-of-flight for the reflected signal based on sampled values of the received signal.

13. The apparatus according to any of claims 8 to 10, wherein the correlator includes a plurality of correlator bins to sample values of the received signal at different time increments.

14. The apparatus of claim 13, wherein the correlator bins include clock inputs that are activated by the transmit signal.

15. A non-transitory computer readable medium embodying a set of executable instructions, the set of executable instructions to manipulate at least one processor to execute the method according to any of claims 1 to 7.
